## Europäisches Patentamt

## European Patent Office

## Office européen des brevets

(19)

(11) Veröffentlichungsnummer: **0 314 792**
**A1**

(12) **EUROPÄISCHE PATENTANMELDUNG**

Veröffentlicht nach Art. 158 Abs. 3 EPÜ

(21) Anmeldenummer: **87905556.4**

(22) Anmeldetag: **28.04.87**

Daten der zugrundeliegenden internationalen Anmeldung:

(86) Internationale Anmeldenummer:
**PCT/SU87/00050**

(87) Internationale Veröffentlichungsnummer:
**WO88/08348 (03.11.88 88/24)**

(51) Int. Cl.³: **B 23 B 31/12**

(43) Veröffentlichungstag der Anmeldung:
**10.05.89 Patentblatt 89/19**

(84) Benannte Vertragsstaaten:
**AT DE FR GB IT SE**

(71) Anmelder: **TBILISSKOE SPETSIALNOE KONSTRUKTORSKO-TEKHNOLOGICHESKOE BJURO STANKOSTROENIA**
**ul. Magnitogorskaya, 1**
**Tbilisi, 380092(SU)**

(72) Erfinder: **SUMENKO, Vladimir Iliich**
**2-i Gvazaursky prokhod, 1-8**
**Tbilisi, 380092(SU)**

(72) Erfinder: **KIKNADZE, Nikolai Avtandilovich**
**ul. Bostan-Kalaki, 5v-2**
**Rustavi, 383040(SU)**

(72) Erfinder: **TANIASHVILI, Teimuraz Shotaevich**
**Gldansky massiv 1-i mikroraion, 14-30**
**Tbilisi, 380119(SU)**

(74) Vertreter: **Lehn, Werner, Dipl.-Ing. et al,**
**Hoffmann, Eitle & Partner Patentanwälte Arabellastrasse 4**
**D-8000 München 81(DE)**

(54) **SELBSTZENTRIERENDE SPANNVORRICHTUNG MIT VIER KLEMMBACKEN.**

(57) Das selbstzentrierende Vierbackenfutter enthält einen Körper (1, 12) in dem Spannbacken (3, 14) radial verschiebbar angeordnet sind, die mit einer mit einem Kraftantrieb zum Bewegen der Spannbacken (3, 14) in Radialrichtung kinematisch verbundenen Selbstzentriereinrichtung zusammenwirken. Die Selbstzentriereinrichtung enthält vier Hebel (6, 25), deren Achsen (7, 24) an einem Glied des Kraftantriebes gelagert sind. Die Spannbacken (3, 14) sind derart ausgebildet, dass die Hebelarmenden der benachbarten Hebel (6, 25) in ihnen unter Bildung eines geschlossenen Kraftkreises (11, 28) untergebracht werden können.

FIG. 1

./...

FIG. 4

# SELBSTZENTRIERENDES VIERBACKENFUTTER

## Anwendungsgebiet

Die vorliegende Erfindung bezieht sich auf Vorrichtungen zum Zentrieren und Spannen von Werkstücken auf Werkzeugmaschinen und betrifft insbesondere selbstzentrierende Vierbackenfutter.

## Zugrundeliegender Stand der Technik

Breit bekannt sind selbstzentrierende Drei- und Vierbackenfutter, bei denen die Spannbacken auf zur Futterachse gleiche Abstände zusammengeführt werden. Beim Spannen von Werkstücken mit Formfehlern der Bezugsfläche sowie von Werkstücken mit dem Querschnitt, der gegenüber seinem Mittelpunkt symmetrisch ist, findet aber in diesen Futtern eine Verschiebung der Werkstückachse hinsichtlich der Achse des betreffenden Futters statt. (V.S.Korsakov, "Osnovy konstruirovania prisposobleny"/*Grundlagen für Konstruieren von Vorrichtungen"/, zweite, überarbeitete und ergänzte Auflage, 1983, Verlag "Mashinostroenie", Moskau, Kapitel 2, § 3, S. 33 bis 35).

Es ist ein selbstzentrierendes Vierbackenfutter bekannt, in dessen Körper Spannbacken radialbewegbar untergebracht sind, die mit einer mit einem Kraftantrieb kinematisch verbundenen Selbstzentriereinrichtung zusammenwirken (SU,A,234826).

Die Selbstzentriereinrichtung enthält zwei Kuppelkurbeln mit gemeinsamer Drehachse. Jede Kuppelkurbel dient zur synchronen Zustellung eines Paares der Spannbacken. Der Kraftantrieb besteht aus zwei koaxialen Zahnrädern, die mit einem dritten Zahnrad, dessen Achse "schwimmend" ausgeführt ist, in Eingriff kommen. Auf der Stirnseite eines jeden koaxialen Zahnrades ist eine Spiralnut eingearbeitet.

Die synchrone Zustellung jedes Spannbackenpaares geschieht folgenderweise. Beim Umlaufen des dritten Zahnrades beginnen die zwei koaxialen Zahnräder gegensinnig umzulaufen. Dabei versetzt eine der Spannbacken jedes

- 2 -

Paares, die mit der stirnseitigen Spiralnut eines der koaxialen Zahnräder zusammenwirkt, indem sie sich in der
Radialnut des Körpers bewegt, die zweite Spannbacke
über die Kuppelkurbel in Bewegung.

Die Spannbacken eines der gegenüberliegenden Paare
halten an,nachdem sie auf der Oberfläche des festzuklemmenden Werkstücks zusammengekommen sind, und eine der
Spannbacken des anderen Paares beginnt nach Berühren des
Werkstückes, dieses in bezug auf die zusammengeschlossenen Spannbacken zu verschieben, bis das Werkstück längs
der Futterachse eingestellt ist, d.h. bis dieses von der
vierten Spannbacke berührt ist. Da die Kraftwechselwirkung zwischen den Paaren der gegenüberliegenden Spannbacken über das Zahnrad mit "schwimmender" Achse erfolgt,
ruft die Vergrösserung der Kraft an der Spannbacke, die
das Werkstück verschiebt, die gleiche Vergrösserung
der Kraft an den zusammengeschlossenen Spannbacken hervor,
und dies führt zu einer ungleichmässigen Verteilung der
Kräfte an den Spannbacken beim Spannen des Werkstücks.
Wenn aber die Bezugsfläche des Werkstücks einen derartigen Formfehler hat, dass zum Verschieben des Werkstücks beim Zentrieren der Abstand zwischen dem Paar der
zusammengeschlossenen Spannbacken vergrössert werden muss,
wird in diesem Fall das Werkstück nach drei Spannbacken
zentriert. Dies geschieht deshalb, weil es im Laufe des
Zentrierens und Spannens des Werkstücks wegen des Eingriffs einer der Spannbacken mit der stirnseitigen
Spiralnut des Zahnrades unmöglich ist, den Abstand zwischen den Spannbacken des zusammengeschlossenen Paares
zu vergrössern. Die Grösstdifferenz der Abstände zwischen den Paaren der gegenüberliegenden Spannbacken ist
durch die Nutlänge des dritten "schwimmenden" Zahnrades
begrenzt.

Das bekannte selbstzentrierende Vierbackenfutter ist
also nicht imstande, eine verhältnismässig hohe Zentrierungsgenauigkeit und Spannungszuverlässigkeit bei
Werkstücken mit dem zu seinen Mittelpunkt symmetrischen
Querschnitt zu gewährleisten.

0314792

## Offenbarung der Erfindung

Der Erfindung liegt die Aufgabe zugrunde, ein selbstzentrierendes Vierbackenfutter zu schaffen, bei dem die Selbstzentriereinrichtung so ausgebildet ist, dass sie eine verhältnismässig hohe Zentrierungsgenauigkeit und Spannungszuverlässigkeit der Werkstücke gewährleistet sowie die technologischen Möglichkeiten beim Spannen von Werkstücken mit dem zu seinem Mittelpunkt symmetrischen Querschnitt sowie von Werkstücken mit Formfehlern der Bezugsfläche erweitert.

Diese Aufgabe wird dadurch gelöst, dass bei einem selbstzentrierenden Vierbackenfutter, in dessen Körper Spannbacken radialverschiebbar angeordnet sind, welche mit einer mit einem Kraftantrieb zum Bewegen der Spannbacken in Radialrichtung kinematisch verbundenen Selbstzentriereinrichtung zusammenwirken, erfindungsgemäss die Selbstzentriereinrichtung vier Hebel enthält, deren Achsen an einem Glied des Kraftantriebs gelagert sind, und die Spannbacken derart ausgebildet sind, dass die Hebelarmenden der benachbarten Hebel in ihnen unter Bildung eines geschlossenen Kraftkreises untergebracht werden können.

Zum Übertragen der Kraft längs der Achse des selbstzentrierenden Vierbackenfutters ist es zweckmässig, das Glied des Kraftantriebs in Form eines im Körper achsbewegbar angeordneten Kreuzstücks auszubilden, in dem Radialbohrungen für die Achsen jedes von vier Hebeln hergestellt sind.

Zum Übertragen der Kraft auf das selbstzentrierende Vierbackenfutter durch Drehen des Gliedes des Kraftantriebes ist es auch zweckmässig, dieses Glied von vier Gleitstücken zu bilden, die in im Körper eingearbeiteten Radialnuten untergebracht sind, wobei in diesen Gleitstücken Bohrungen für die Hebelachsen senkrecht zur Bewegungsrichtung der Gleitstücke hergestellt sind.

Das erfindungsgemässe selbstzentrierende Vierbackenfutter ist eine universelle Vorrichtung, die es ermöglicht, das Werkstück unabhängig von seiner Lage im Futter verhältnismässig genau in zwei aufeinander senkrecht stehenden Richtungen zu zentrieren und zu spannen sowie Werk-

- 4 -

0314792

stücke zu zentrieren und zu spannen, die einen in bezug auf seinen Mittelpunkt symmetrischen Querschnitt haben (beispielsweise Kreis, Oval, Quadrat, Rechteck, Sechseck und dgl.), ohne dass die Spannbacken des Futters umgerichtet werden müssen.

## Kurze Beschreibung der Zeichnungen

Nachstehend werden konkrete Ausführungsbeispiele für das erfindungsgemässe selbstzentrierende Vierbackenfutter mit Hinweisen auf die beigefügten Zeichnungen angeführt, in denen es zeigt:

Fig. 1 die erste Ausführungsvariante des selbstzentrierenden Vierbackenfutters, Vorderansicht,

Fig. 2 den Schnitt nach Linie II-II der Fig. 1,

Fig. 3 den Schnitt nach Linie III-III der Fig. 1,

Fig. 4 die zweite Ausführungsvariante des selbstzentrierenden Vierbackenfutters, Vorderansicht,

Fig. 5 den Schnitt nach Linie V-V der Fig. 4.

## Bevorzugte Ausführungsvarianten der Erfindung

### Erste Ausführungsvariante der Erfindung

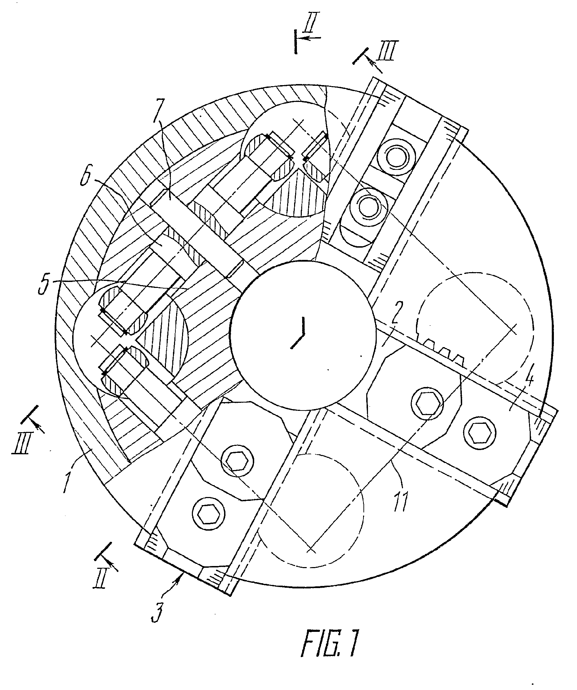

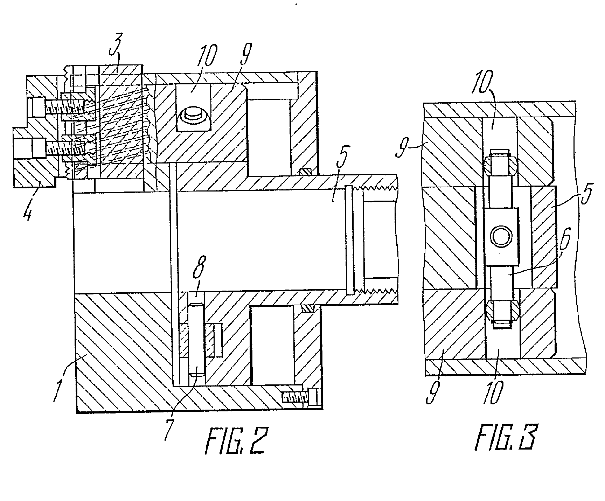

Das selbstzentrierende Vierbackenfutter enthält einen Körper 1 (Fig. 1), in dessen Radialnuten 2 Spannbacken 3 bewegbar untergebracht sind, welche mit Spannelementen 4 versehen sind. Im Körper 1 ist ein Kreuzstück 5 (Fig. 1,2) achsbewegbar angeordnet, welches ein Gleid eines (in der Zeichnung nicht gezeigten) Kraftantriebes ist, der eine beliebige bekannte zu diesem Zweck geeignete Konstruktion haben kann. Die kinematische Bindung des Kreuzstücks 5 mit den Spannbacken 3 erfolgt mittels einer Selbstzentriereinrichtung. Die Selbstzentriereinrichtung enthält vier Hebel 6, deren Achsen 7 in im Kreuzstück 5 hergestellten Radialbohrungen 8 (Fig. 2) gelagert sind. Jede Spannbacke 3 ist mit Hilfe eines Keileingriffs mit einem Gleitstück 9 verbunden. In jedem Gleitstück 9 sind zueinander senkrecht gerichtete Längsnuten 10 (Fig. 2, 3) hergestellt, in denen die Hebelarmenden benachbarter Hebel 6 untergebracht sind. Vier Gleitstücke 9 und vier Hebel 6 bilden zusammengebaut einen geschlossenen Kraftkreis II (Fig. 1).

Zweite Ausführungsvariante der Erfindung

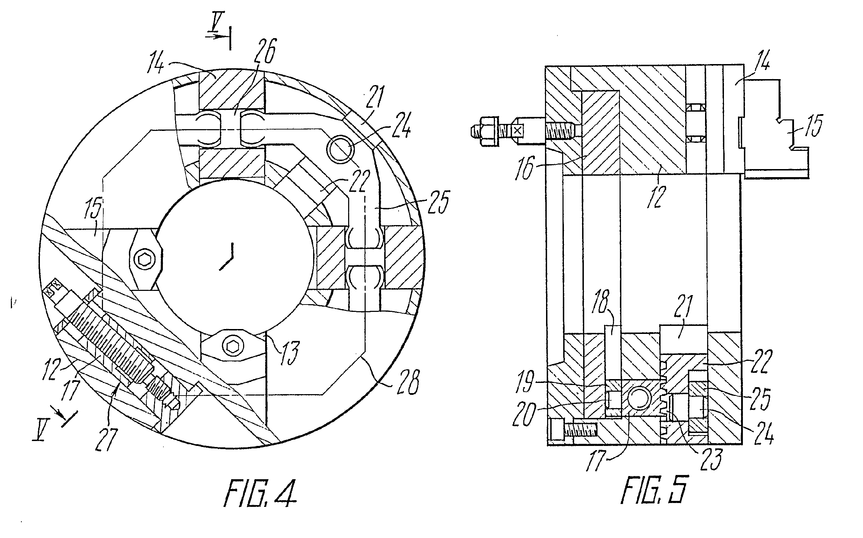

Das selbstzentrierende Vierbackenfutter enthält einen Körper 12 (Fig. 4), in dessen Radialnuten 13 Spannbacken 14 bewegbar untergebracht sind, welche mit Spannelementen 15 versehen sind. Die kinematische Kette des Kraftantriebs enthält einen Ring 16 (Fig. 5) und vier Keilleisten 17. Im Ring 16, der im Körper 12 hinsichtlich seiner Achse drehbar angeordnet ist, sind vier Radialnuten 18 hergestellt. Jede Keilleiste 17 kommt in Eingriff mit dem Ring 16 mittels eines Nutensteins 19, der an die Achse 20 der Keilleiste 17 angelenkt in der Radialnut 18 bewegbar untergebracht.ist. Im Körper 12 sind vier Radialnuten 21 hergestellt, in deren jeder ein Keilgleitstück 22 untergebracht ist, das ein Element des Kraftantriebes ist und mit der Keilleiste 17 in Eingriff steht. In jedem Keilgleitstück 22 ist eine Bohrung 23 für eine Achse 24 senkrecht zu seiner Bewegungsrichtung ausgebildet. An jeder Achse 24 ist ein Winkelhebel 25 angebracht. In jeder Spannbacke 14 ist senkrecht zu ihrer Bewegungsrichtung eine Nut 26 (Fig. 4) hergestellt, in der Hebelarmenden der benachbarten Winkelhebel 25 untergebracht sind. Die Funktion des Kraftantriebes übernimmt ein kinematisches "Mutter-Schraube"-Paar 27, wobei die Rolle der "Mutter" eine der vier Keilleisten 17 spielt. Die erwähnten vier Winkelhebel 25 und vier Spannbacken 14 bilden zusammengebaut einen geschlossenen Kraftkreis 28.

Das selbstzentrierende Vierbackenfutter gemäss der ersten Ausführungsvariante der Erfindung arbeitet folgenderweise.

Durch einen (in der Zeichnung nicht gezeigten) Kraftantrieb wird das Kreuzstück 5 gemeinsam mit den Hebeln 6, die an den Achsen 7 in den Radialbohrungen 8 des Kreuzstücks 5 angebracht sind, längs der Futterachse bewegt. Jeder Hebel 6 bewegt mit seinen Hebelarmenden, die in den Längsnuten 10 von zwei benachbarten Gleitstücken 9 angeordnet sind, diese letztgenannten, die über die Keilverbindung mit den entsprechenden Spannbacken 3 diese über die Längsnuten 2 des Körpers 1 in Richtung auf die Oberfläche des Werkstücks (in der Zeichnung nicht gezeigt) bewegen. Wenn eines der Spannelemente 4 die Oberfläche des zu spannenden Werkstücks berührt, hält die damit verbundene Spannbacke 3 an, während das Kreuzstück 5 durch das Schwenken der Hebel 6 auf den Achsen 7 seine Bewegung fortsetzt.

Wenn sich auf der Oberfläche des Werkstücks die gegenüberliegenden Spannelemente 4 (Fig. 1) zusammenschliessen, hört ihre Bewegung auf, bis das dritte Spannelemente 4 die Oberfläche des Werkstücks berührt.

Wenn aber die Oberfläche des Werkstücks von dem Spannelement 4 berührt wird, das dem Spannelement benachbart ist, welches die Oberfläche des Werkstücks schon berührt hat, so schließt sich die Verbindung zwischen ihnen über den entsprechenden Hebel 6 zusammen, und sie beginnen gemeinsam das Werkstück in Richtung zur Futterachse zu verschieben, bis die Oberfläche des Werkstücks von dem dritten Spannelement 4 berührt ist.

Nachdem drei Spannelemente 4 auf der Oberfläche des Werkstücks zusammengekommen sind, wird die Verbindung zwischen ihnen über zwei benachbarte Hebel 6 zusammengeschlossen, und die Verschiebung des Werkstücks in Richtung zum vierten Spannelement 4 wird von dem diesem gegenüberliegenden Spannelement 4 durch die Kraft bewirkt, welche von den Hebelarmenden von zwei mit diesem letztgenannten Spannelement verbundenen Hebeln 6 erzeugt wird. Diese Kraft übersteigt die Reibungskräfte zwischen dem Werkstück und zwei anderen zusammengeschlossenen Spannelementen 4.

Nachdem das Werkstück von dem vierten Spannelement 4 berührt ist, beginnen alle vier Spannelemente das Werkstück durch den Kraftantrieb festzuklemmen.

Durch den geschlossenen Kraftkreis 11, der von den Gleitstücken 9 und Hebeln 6 gebildet ist, deren Hebelarmenden in den Längsnuten 10 der benachbarten Gleitstücke 9 untergebracht sind, liegt die Gleichheit der Abstände der paarweise gegenüberliegenden Spannbacken 3 in bezug auf die Futterachse vor.

Das selbstzentrierende Vierbackenfutter gemäss der zweiten Ausführungsvariante der Erfindung arbeitet

Nachdem drei Spannelemente 15 auf der Oberfläche des Werkstücks zusammengekommen sind, wird die Verbindung zwischen ihnen über zwei benachbarte Winkelhebel 25 zusammengeschlossen, und die Verschiebung des Werkstückes in Richtung zum vierten Spannelement 15 wird von dem diesem gegenüberliegenden Spannelement 15 bewirkt, und zwar durch die Kraft, welche von den Hebelarmenden von zwei mit diesem letztgenannten Spannelement verbundenen Winkelhebeln 25 erzeugt wird. Diese Kraft übersteigt die Reibungskräfte zwischen dem Werkstück und zwei anderen zusammengeschlossenen Spannelementen 15.

Nachdem das Werkstück von dem vierten Spannelement 15 berührt ist, beginnen alle vier Spannelemente 15 das Werkstück durch den Kraftantrieb festzuklemmen.

Durch den geschlossenen Kraftkreis 28, der von den Spannbacken 14 und Winkelhebeln 25 gebildet ist, deren Hebelarmenden in den Nuten 26 untergebracht sind, welche in den Spannbacken 14 senkrecht zur Bewegungsrichtung der letzteren hergestellt sind, liegt die Gleichheit der Abstände der paarweise gegenüberliegenden Spannbacken 14 in bezug auf die Futterachse vor.

Für jede beschriebene Ausführungsvariante des selbstzentrierenden Vierbackenfutters gewährleistet der in dem Futter vorgesehene geschlossene Kraftkreis eine präzise Zentrierung des Werkstücks in zwei aufeinander senkrecht stehenden Richtungen. Die Formfehler der Bezugsfläche üben keinen Einfluss auf die Zentrierungsgenauigkeit aus, und die Spannungszuverlässigkeit des Werkstücks wird dadurch erreicht, dass während der Zentrierung die zusammengeschlossenen Spannelemente geöffnet werden können, bevor das Werkstück an allen vier Spannelementen eingestellt ist.

Die beiden Ausführungsformen des selbstzentrierenden Vierbackenfutters ermöglichen es, den Bereich der relativen Abmessungsdifferenz zwischen den Paaren der gegenüberliegenden Spannbacken zu vergrössern.

Ein erfindungsgemässes Versuchsmuster des selbstzentrierenden Vierbackenfutters wurde im Zentrator einer Werkzeugmaschine zur Bearbeitung von Rohren des Erdölrohrsortiments montiert. Dadurch wurde der Prozentsatz des folgenderweise.

Indem man die Schraube des kinematischen Paares 27 (Fig. 4) dreht, setzt man eine von vier Keilleisten 17, welche die "Mutter" dieses Paares darstellt, in Bewegung. Diese sich tangentiell bewegende Keilleiste 17 überträgt die Bewegung dem Ring 16 über den an ihre Achse 20 (Fig.5) angelenkten, in den Radialnuten 18 des Ringes 16 angeordneten Nutenstein 19. Beim Drehen des Ringes 16 in bezug auf die Futterachse erfolgt die tangentielle Bewegung von übrigen drei Keilleisten 17. Jede von vier Keilleisten 17 überträgt die Bewegung über den Keileingriff den Gleitstücken 22, die in den Radialnuten 21 des Körpers 12 untergebracht sind. Indem sie sich in Radialrichtung bewegen, verschieben die Gleitstücke 22 über die Achsen 24, die in den Bohrungen 23 des Gleitstücks 22 angeordnet sind, welche senkrecht zur Bewegungsrichtung des letzteren verlaufen, die Winkelhebel 25 in Radialrichtung. Jeder Winkelhebel 25 bewegt mit seinen Hebelarmenden, die in den Nuten 26 (Fig. 4) der benachbarten Spannbacken 14 untergebracht sind, diese letzteren in Radialrichtung. Wenn eines der Spannelemente 15 die Oberfläche des zu spannenden Werkstücks berührt, hält die damit verbundene Spannbacke 14 an, während die Gleitstücke 22 durch Schwenken der Winkelhebel 25 auf den Achsen 24 ihre Bewegung in den Radialnuten 21 des Körpers 12 fortsetzen.

Wenn sich auf der Oberfläche des Werkstücks die gegenüberliegenden Spannelemente 15 zusammenschliessen, hört ihre Bewegung auf, bis das dritte Spannelement 15 die Oberfläche des Werkstücks berührt.

Wenn aber die Oberfläche des Werkstücks von dem Spannelement 15 berührt wird, das dem Spannelement 15 benachbart ist, welches die Oberfläche des Werkstücks schon berührt hat, so wird die Verbindung zwischen ihnen über den entsprechenden Winkelhebel 25 zusammengeschlossen, und sie beginnen gemeinsam das Werkstück in Richtung zur Futterachse zu verschieben, bis die Oberfläche des Werkstücks von dem dritten Spannelement 15 berührt ist.

Ausschusses beim Gewindeschneiden wesentlich vermindert sowie aufgrund einer gleichmässigeren Verteilung der Bearbeitungszugabe beim Gewindeschneiden an den Enden von Rohren, die in nach minus gehenden Toleranzfeldern für Aussendurchmesser gewalzt sind, eine zusätzliche Metallersparnis erzielt.

## Gewerbliche Anwendbarkeit

Die vorliegende Erfindung kann am zweckmässigsten auf Rohrgewindeschneidmaschinen zum Zentrieren des zu bearbeitenden Rohrendes eingesetzt werden.

Diese Erfindung lässt sich zum Zentrieren und Spannen von Werkstücken mit Formfehlern der Bezugsfläche sowie von Werkstücken mit dem Querschnitt, der bezüglich seines Mittelpunktes symmetrisch ist (Kreis, Oval, Quadrat, Rechteck, Sechseck und dgl.), benutzen.

PATENTANSPRÜCHE

1. Selbstzentrierendes Vierbackenfutter, in dessen Körper (1, 12) Spannbacken (3, 14) radial verschiebbar angeordnet sind, welche mit einer mit einem Kraftantrieb zum Bewegen der Spannbacken in Radialrichtung kinematisch verbundenen Selbstzentriereinrichtung zusammenwirken, dadurch g e k e n n z e i c h n e t, dass die Selbstzentriereinrichtung vier Hebel (6, 25) enthält, deren Achsen (7,24) an einem Glied des Kraftantriebes gelagert sind, und die Spannbacken (3, 14) derart ausgebildet sind, dass die Hebelarmenden der benachbarten Hebel (6, 25) in ihnen unter Bildung eines geschlossenen Kraftkreises (11, 28) untergebracht werden können.

2. Selbstzentrierendes Vierbackenfutter nach Anspruch 1, dadurch g e k e n n z e i c h n e t, dass das Glied des Kraftantriebes in Form eines im Körper (1) achsbewegbar angeordneten Kreuzstücks (5) ausgebildet ist, in dem Radialbohrungen (8) für die Achsen (7) jedes von vier Hebeln (6) hergestellt sind.

3. Selbstzentrierendes Vierbackenfutter nach An- spruch 1, dadurch g e k e n n z e i c h n e t, dass das Glied des Kraftantriebes von vier in im Körper (12) ein- gearbeiteten Radialnuten (21) untergebrachten Gleitstü- cken (22) gebildet ist, wobei in diesen Gleitstücken (22) Bohrungen (23) für die Achsen (24) der Hebel (25) senkrecht zur Bewegungsrichtung der Gleitstücke (22) hergestellt sind, während jedes Gleitstück (22) über ein Zwischenelement mit einen im Körper (12) hinsichtlich seiner Achse drehbar angeordneten Ring (16) verbunden ist.

4. Selbstzentrierendes Vierbackenfutter nach Anspruch 3, dadurch g e k e n n z e i c h n e t, dass die Verbindung jedes Gleitstücks (22) mit dem Zwischenelement durch Zahneingriff und die Verbindung des Ringes (16) mit jedem Zwischenelement durch einen angelenkten, in der Radialnut (18) des Ringes (16) bewegbar untergebrachten Nut- enstein (19) erfolgt.

- 12 -

Geänderte Patentansprüche nach der internationalen
Anmeldung PCT/SU 87/00050

1. Selbstzentrierendes Vierbackenfutter, in dessen Körper (1,12) Spannbacken (3, 14) radial verschiebbar angeordnet sind, welche mit einer mit einem Kraftantrieb zum Bewegen der Spannbacken in Radialrichtung kinematisch verbundenen Selbstzentriereinrichtung zusammenwirken, dadurch gekennzeichnet, dass die Selbstzentriereinrichtung vier Hebel (6,25) enthält, deren Achsen (7,24) an einem Glied des Kraftantriebes gelagert sind, und die Hebelenden mit den benachbarten Spannbacken unter Bildung eines geschlossenen Kraftkreises verbunden sind.

2. Selbstzentrierendes Vierbackenfutter nach Anspruch 1, dadurch gekennzeichnet, dass das Glied des Kraftantriebs in Form eines im Körper (1) achsbewegbar untergebrachten Kreuzstücks (5) ausgebildet ist, in dem Radialbohrungen (8) für die Achsen (7) jedes von vier Hebeln (6) hergestellt sind.

3. (geändert) Selbstzentrierendes Vierbackenfutter nach Anspruch 1, dadurch gekennzeichnet, dass das Glied des Kraftantriebes in im Körper (12) eingearbeiteten Radialnuten (21) von vier Gleitstücken (22) gebildet ist, wobei in diesen Gleitstücken (22) Bohrungen (23) für die Achsen (24) der Hebel (25) senkrecht zur Bewegungsrichtung der Gleitstücke (22) hergestellt sind.

FIG. 1

0314792

FIG. 2

FIG. 3

FIG. 4

FIG. 5

0314792

0314792.

# INTERNATIONAL SEARCH REPORT

International Application No PCT/SU 87/00050

## I. CLASSIFICATION OF SUBJECT MATTER (if several classification symbols apply, indicate all) •

According to International Patent Classification (IPC) or to both National Classification and IPC

Int.Cl.$^4$:  B 23 B 31/12

## II. FIELDS SEARCHED

| Minimum Documentation Searched 7 | |
|---|---|
| Classification System | Classification Symbols |
| Int.Cl.$^4$: | B 23 B 31/00; 31/02, 31/12, 31/16 |

| Documentation Searched other than Minimum Documentation to the Extent that such Documents are Included in the Fields Searched • |
|---|
| |

## III. DOCUMENTS CONSIDERED TO BE RELEVANT •

| Category * | Citation of Document, 11 with indication, where appropriate, of the relevant passages 12 | Relevant to Claim No. 13 |
|---|---|---|
| Y | DE, B2, 1816655, (PAUL FORKARDT KG), 26 November 1970, see column 3, lines 10-20, fig. 1,3 | 1,3,4 |
| A | US, A, 2828134, (J.R. BUCK et al) 25 March 1958, see column 3, lines 20-40, fig. 1 | 1,2 |
| A | US, A, 2932524, (R.B. PEALER), 12 April 1960, see column 2, lines 40-45, column 3, lines 20-25, fig. 3 | 1,2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| 26 November 1987 (26.11.87) | 14 January 1988 (14.01.88) |
| International Searching Authority | Signature of Authorized Officer |
| ISA/SU | |

Form PCT/ISA/210 (second sheet) (January 1985)